# EUROPEAN PATENT APPLICATION

(11) **EP 4 610 845 A1**
(43) Date of publication of application: **03.09.2025**
(21) Application number: 23884831.1
(22) Date of filing: 30.10.2023
(51) Int. Cl.: G06F 16/27

(54) **STORAGE METHOD AND APPARATUS BASED ON OBJECT STORAGE SERVICE**

(30) Priority: 01.11.2022 CN 202211355629
(71) Applicant: Huawei Cloud Computing Technologies Co., Ltd., Guiyang, Guizhou 550025 (CN)
(72) Inventor: WANG, Wang, Guiyang, Guizhou 550025 (CN); XIE, Xiaoqin, Guiyang, Guizhou 550025 (CN)
(74) Representative: Gill Jennings & Every LLP
(86) International application number: PCT/CN2023/127703
(87) International publication number: WO 2024/093901

(57) **Abstract**

An object storage service-based storage method and apparatus are provided, to resolve a problem in an existing technology that a requirement of a tenant for storing objects having different distribution characteristics cannot be met because an object storage server stores objects in a bucket in a sequential distribution manner by default. In this application, the object storage server pre-obtains a configuration parameter, where the configuration parameter includes a target distribution manner selected by the tenant from a plurality of distribution manners, and the plurality of distribution manners include a sequential distribution manner and a discrete distribution manner. The object storage server creates a bucket based on the configuration parameter, where the bucket includes a plurality of logical partitions. When the object storage server obtains an object to be stored in the bucket, the object storage server may select a target logical partition from the plurality of logical partitions based on the configuration parameter and a name string of the object, to store the object in the target logical partition.

## Description

### CROSS-REFERENCE TO RELATED APPLICATIONS

This application claims priority to Chinese Patent Application No. 202211355629.9, filed with the China National Intellectual Property Administration on November 1, 2022 and entitled "OBJECT STORAGE SERVICE-BASED STORAGE METHOD AND APPARATUS", which is incorporated herein by reference in its entirety.

### TECHNICAL FIELD

This application relates to the field of computer technologies, and in particular, to an object storage service-based storage method and apparatus.

### BACKGROUND

An object storage service (object storage service, OBS) is an object-based storage service, and has advantages of storage of massive data, high security, high reliability, and low costs. The OBS is a service oriented to internet (internet) access. A tenant can create, by establishing a connection between an object storage client and an object storage server (a compute node that supports the OBS), a bucket (bucket) on a storage node managed by the object storage server, and further access and manage an object in the bucket.

The object storage server stores objects in the bucket in a sequential distribution manner by default. The sequential distribution manner may also be referred to as dictionary order-based distribution or range (range) distribution. This is understood as that the bucket includes a plurality of logical partitions. When the tenant needs to store an object in the bucket, the object storage server may sequentially allocate the object to a logical partition in the plurality of logical partitions based on a name string of the object. For example, it is specified that an object whose name string is less than or equal to "C" is stored in a partition 1, an object whose name string is less than or equal to "R" is stored in a partition 2, and an object whose name string is greater than "R" is stored in a partition 3. To be specific, when obtaining an object whose name string is "A", the object storage server stores the object in the partition 1; and when obtaining an object whose name string is "X", the object storage server stores the object in the partition 3.

However, a requirement of the tenant for storing objects having different distribution characteristics cannot be met because the object storage server stores the object in the bucket in the sequential distribution manner by default.

### SUMMARY

This application provides an object storage service-based storage method and apparatus, to meet a requirement of a tenant for storing objects having different distribution characteristics.

According to a first aspect, this application provides an object storage service-based storage method. The method is applied to an object storage server, and the method includes: The object storage server obtains an object to be stored in a bucket, where the bucket includes a plurality of logical partitions. The object storage server may select a target logical partition from the plurality of logical partitions based on a configuration parameter and a name string of the object, where the configuration parameter includes a target distribution manner, and the target distribution manner is selected by a tenant from a plurality of distribution manners. The object storage server stores the object in the target logical partition. In a possible implementation, the plurality of distribution manners include a sequential distribution manner and a discrete distribution manner.

In the foregoing technical solution, the object storage server determines, based on the target distribution manner selected by the tenant and the name string of the object to be stored in the bucket, to store the object in a logical partition (that is, the target logical partition) in the bucket. The target distribution manner may be specifically selected by the tenant based on a distribution characteristic of an object that the tenant expects to store. This helps meet a requirement of the tenant for storing objects having different distribution characteristics.

In a possible implementation, when the target distribution manner is the discrete distribution manner, that the object storage server selects a target logical partition from the plurality of logical partitions based on a configuration parameter and a name string of the object may be specifically: The object storage server determines a hash value of the name string of the object based on the discrete distribution manner in the configuration parameter. The object storage server selects the target logical partition based on a mapping relationship between the hash value and the plurality of logical partitions.

In the foregoing technical solution, when the target distribution manner is the discrete distribution manner, the object storage server may discretely distribute different objects to the plurality of logical partitions of the bucket by performing hashing on a name string of the object, to help balance objects/data stored in the plurality of partitions.

In a possible implementation, when the target distribution manner is the discrete distribution manner, the configuration parameter further includes a target discrete rule, and the target discrete rule is selected by the tenant from a plurality of discrete rules. That the object storage server selects a target logical partition from the plurality of logical partitions based on a configuration parameter and a name string of the object may be specifically: The object storage server selects a target string from the name string of the object based on the discrete distribution manner and the target discrete rule that are in the configuration parameter. The object storage server determines a hash value of the target string, and selects the target logical partition based on a mapping relationship between the hash value and the plurality of logical partitions.

Optionally, the plurality of discrete rules include one or more of the following: a first discrete rule, indicating the object storage server to combine a plurality of characters in a prefix of the name string into the target string; a second discrete rule, indicating the object storage server to combine the first N characters in the name string into the target string, where N is an integer greater than 1; and a third discrete rule, indicating the object storage server to combine, into the target string, a plurality of characters in the name string that satisfy a regular expression.

In the foregoing technical solution, when the target distribution manner is the discrete distribution manner, the object storage server may further determine, based on the target discrete rule selected by the tenant and the name string of the object to be stored in the bucket, the target string of the object, and then distribute, by performing hashing on the target string of the object, different objects having a same target string to a same logical partition of the bucket. The target discrete rule may be specifically selected by the tenant based on a distribution characteristic of an object that the tenant expects to store. This helps meet the requirement of the tenant for storing the objects having different distribution characteristics.

In a possible implementation, before obtaining the to-be-stored object, the object storage server further receives the configuration parameter from an object storage client. The object storage server creates the bucket based on the configuration parameter.

In the foregoing technical solution, the tenant may set the configuration parameter when logging in to the object storage server through the object storage client and creating the bucket in the object storage server, so that the object storage server creates the bucket based on the configuration parameter. In this way, the created bucket may match the target distribution manner selected by the tenant, or match the target distribution manner and the target discrete rule that are selected by the tenant, to help meet the requirement of the tenant for storing the objects having different distribution characteristics.

According to a second aspect, this application provides an object storage service-based configuration method. The method is applied to an object storage client, and the method includes: The object storage client receives a first instruction, where the first instruction includes a target distribution manner selected by a tenant from a plurality of distribution manners. The object storage client generates a configuration parameter, where the configuration parameter includes the target distribution manner. The object storage client sends the configuration parameter to an object storage server, where the configuration parameter is used by the object storage server to create a bucket. In a possible implementation, the plurality of distribution manners include a sequential distribution manner and a discrete distribution manner.

In the foregoing technical solution, the object storage client obtains the target distribution manner selected by the tenant, and generates the configuration parameter based on the target distribution manner. The configuration parameter is used by the object storage server to create the bucket. In this way, the bucket created by the object storage server may match the target distribution manner selected by the tenant, to help meet a requirement of the tenant for storing objects having different distribution characteristics.

In a possible implementation, when the target distribution manner is the discrete distribution manner, after receiving the first instruction, the object storage client further receives a second instruction, where the second instruction includes a target discrete rule selected by the tenant from a plurality of discrete rules, and the configuration parameter further includes the target discrete rule.

Optionally, the plurality of discrete rules include one or more of the following: a first discrete rule, indicating the object storage server to combine a plurality of characters in a prefix of a name string into a target string; a second discrete rule, indicating the object storage server to combine the first N characters in the name string into the target string, where N is an integer greater than 1; and a third discrete rule, indicating the object storage server to combine, into the target string, a plurality of characters in the name string that satisfy a regular expression.

In the foregoing technical solution, the object storage client obtains the target discrete rule selected by the tenant, and generates the configuration parameter based on the target distribution manner and the target discrete rule. The configuration parameter is used by the object storage server to create the bucket. In this way, the bucket created by the object storage server may match the target distribution manner and the target discrete rule that are selected by the tenant, to help meet the requirement of the tenant for storing the objects having different distribution characteristics.

According to a third aspect, this application provides an object storage service-based storage apparatus. The apparatus is used in an object storage server, and the apparatus includes: an obtaining module, configured to obtain an object to be stored in a bucket, where the bucket includes a plurality of logical partitions; a selection module, configured to select a target logical partition from the plurality of logical partitions based on a configuration parameter and a name string of the object, where the configuration parameter includes a target distribution manner, and the target distribution manner is selected by a tenant from a plurality of distribution manners; and a storage module, configured to store the object in the target logical partition.

In a possible implementation, the plurality of distribution manners include a sequential distribution manner and a discrete distribution manner.

In a possible implementation, when the target distribution manner is the discrete distribution manner, when selecting the target logical partition from the plurality of logical partitions based on the configuration parameter and the name string of the object, the selection module is specifically configured to: determine a hash value of the name string of the object based on the discrete distribution manner in the configuration parameter; and select the target logical partition based on a mapping relationship between the hash value and the plurality of logical partitions.

In a possible implementation, when the target distribution manner is the discrete distribution manner, the configuration parameter further includes a target discrete rule, and the target discrete rule is selected by the tenant from a plurality of discrete rules. When selecting the target logical partition from the plurality of logical partitions based on the configuration parameter and the name string of the object, the selection module is specifically configured to: select a target string from the name string of the object based on the discrete distribution manner and the target discrete rule that are in the configuration parameter; determine a hash value of the target string; and select the target logical partition based on a mapping relationship between the hash value and the plurality of logical partitions.

In a possible implementation, the plurality of discrete rules include one or more of the following: a first discrete rule, indicating the object storage server to combine a plurality of characters in a prefix of the name string into the target string; a second discrete rule, indicating the object storage server to combine the first N characters in the name string into the target string, where N is an integer greater than 1; and a third discrete rule, indicating the object storage server to combine, into the target string, a plurality of characters in the name string that satisfy a regular expression.

In a possible implementation, the apparatus further includes a bucket creation module. Before the obtaining module obtains the to-be-stored object, the bucket creation module is configured to: receive the configuration parameter from an object storage client; and create the bucket based on the configuration parameter.

According to a fourth aspect, this application provides an object storage service-based configuration apparatus. The apparatus is used in an object storage client, and the apparatus includes: a receiving module, configured to receive a first instruction, where the first instruction includes a target distribution manner selected by a tenant from a plurality of distribution manners; a generation module, configured to generate a configuration parameter, where the configuration parameter includes the target distribution manner; and a sending module, configured to send the configuration parameter to an object storage server, where the configuration parameter is used by the object storage server to create a bucket.

In a possible implementation, the plurality of distribution manners include a sequential distribution manner and a discrete distribution manner.

In a possible implementation, when the target distribution manner is the discrete distribution manner, after receiving the first instruction, the receiving module is further configured to receive a second instruction, where the second instruction includes a target discrete rule selected by the tenant from a plurality of discrete rules, and the configuration parameter further includes the target discrete rule.

In a possible implementation, the plurality of discrete rules include one or more of the following: a first discrete rule, indicating the object storage server to combine a plurality of characters in a prefix of a name string into a target string; a second discrete rule, indicating the object storage server to combine the first N characters in the name string into the target string, where N is an integer greater than 1; and a third discrete rule, indicating the object storage server to combine, into the target string, a plurality of characters in the name string that satisfy a regular expression.

According to a fifth aspect, this application provides an object storage service-based storage system, including an object storage server and an object storage client, where the object storage server is configured to perform the method according to any one of the first aspect or the possible implementations of the first aspect, and the object storage client is configured to perform the method according to any one of the second aspect or the possible implementations of the second aspect.

According to a sixth aspect, this application provides a computing device cluster, including at least one computing device, and each computing device includes a processor and a memory. The processor of the at least one computing device is configured to execute instructions stored in the memory of the at least one computing device, to enable the computing device cluster to perform the method according to any one of the first aspect or the possible implementations of the first aspect.

According to a seventh aspect, this application provides a computing device, including a processor and a memory. The processor is configured to execute instructions stored in the memory, to enable the computing device to perform the method according to any one of the second aspect or the possible implementations of the second aspect.

According to an eighth aspect, this application provides a computer program product including instructions. When the instructions are run by a computing device cluster, the computing device cluster is enabled to perform the method according to any one of the first aspect or the possible implementations of the first aspect.

According to a ninth aspect, this application provides a computer program product including instructions. When the instructions are run by a computing device, the computing device is enabled to perform the method according to any one of the second aspect or the possible implementations of the second aspect.

According to a tenth aspect, this application provides a computer-readable storage medium, including computer program instructions. When the computer program instructions are executed by a computing device cluster, the computing device cluster performs the method according to any one of the first aspect or the possible implementations of the first aspect.

According to an eleventh aspect, this application provides a computer-readable storage medium, including computer program instructions. When the computer program instructions are executed by a computing device, the computing device performs the method according to any one of the second aspect or the possible implementations of the second aspect.

For technical effects that can be achieved in any one of the third aspect to the eleventh aspect, refer to the descriptions of beneficial effects in the first aspect or the second aspect. Details are not described herein again.

### BRIEF DESCRIPTION OF DRAWINGS

FIG. 1 is a diagram of a logical architecture of an object storage service;
FIG. 2 is a diagram of an architecture of an object storage system;
FIG. 3 is a diagram of a structure of a storage device;
FIG. 4 is a schematic flowchart of an object storage service-based configuration method according to this application;
FIG. 5 is a schematic flowchart of an object storage service-based storage method according to this application;
FIG. 6 is a diagram of discrete distribution corresponding to a first discrete rule according to this application;
FIG. 7 is a diagram of discrete distribution corresponding to a second discrete rule according to this application;
FIG. 8 is a diagram of discrete distribution corresponding to a third discrete rule according to this application;
FIG. 9 is a diagram of a structure of an object storage service-based storage apparatus according to this application;
FIG. 10 is a diagram of a structure of an object storage service-based configuration apparatus according to this application;
FIG. 11 is a diagram of a structure of an object storage service-based storage system according to this application;
FIG. 12 is a diagram of a structure of a computing device according to this application; and
FIG. 13 is a diagram of a structure of a computing device cluster according to this application.

### DESCRIPTION OF EMBODIMENTS

The following describes technical solutions in embodiments of the present invention with reference to the accompanying drawings in embodiments of the present invention. It is clear that the described embodiments are merely a part rather than all of embodiments of the present invention. All other embodiments obtained by a person of ordinary skill in the art based on embodiments of the present invention without creative efforts shall fall within the protection scope of the present invention.

For ease of understanding of this application, some terms in this application are first explained and described.

### 1. Cloud platform

A cloud platform may provide a page related to a public cloud service for a tenant to remotely access the public cloud service. The tenant may log in to the cloud platform on a public cloud access page by using a pre-registered account and password. After the login is successful, the tenant may select and purchase a corresponding public cloud service, for example, an OBS, a virtual machine service, or a container service, on the public cloud access page.

For the OBS, the tenant may further configure the OBS through a configuration interface provided on the public cloud access page or an application programming interface (application programming interface, API), for example, perform operations on a bucket such as creating the bucket, configuring a bucket access policy, and uploading an object from a local computer of the tenant to the bucket over an internet. In this application, a cloud platform configured to provide the OBS is referred to as an object storage server.

### 2. Bucket (bucket)

A bucket (bucket) is a container that stores an object in an OBS. Object storage provides a flat storage manner based on the bucket and the object, and all objects in the bucket are at a same logical layer, eliminating a multi-level tree directory structure in a file system. Each bucket has respective attributes such as a storage category, an access permission, and a region to which the bucket belongs. A tenant may create buckets with different storage categories and access permissions and configure more advanced attributes to meet storage requirements in different scenarios.

In the OBS, a bucket name is globally unique and cannot be changed. To be specific, a name of a bucket created by the tenant cannot be the same as a name of another bucket that has been created by the tenant and cannot be the same as a name of a bucket created by another tenant.

The tenant can log in to an object storage server by using an account, create a plurality of buckets through a configuration interface on an access page provided by the object storage server or an API, and further configure a bucket name for the bucket. A quantity and a total size of objects stored in each bucket are not limited. The tenant does not need to consider data scalability. The tenant can use a uniform resource locator (uniform resource locator, URL) (also referred to as a bucket domain name) to locate a bucket resource.

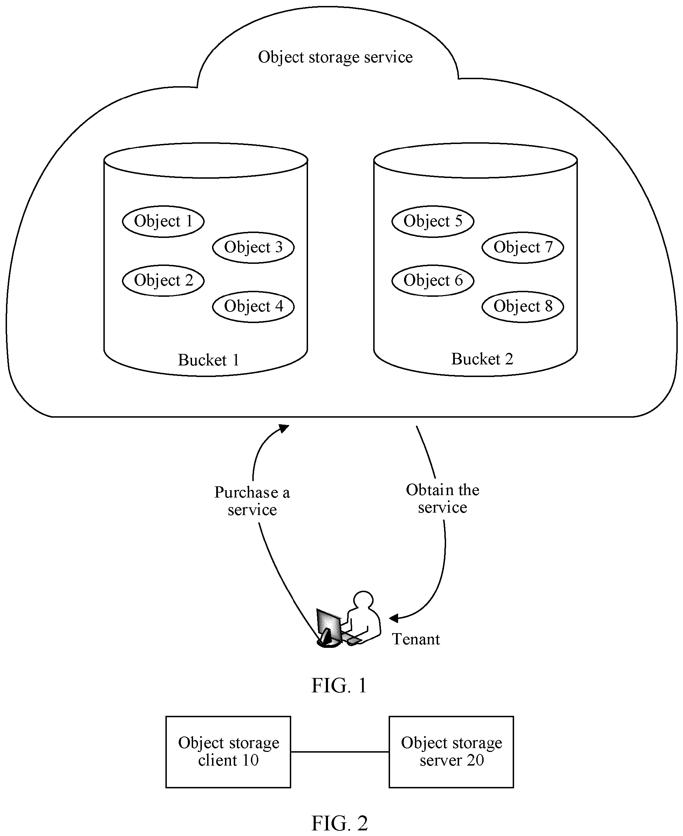

For example, a relationship between buckets and objects in the OBS is shown in FIG. 1. FIG. 1 is a diagram of a logical architecture of an object storage service. Each bucket may include a plurality of objects (which are described in detail below). Objects between buckets are isolated from each other. The tenant logs in to the object storage server by operating an object storage client, and remotely purchases an object storage service from the object storage server. Correspondingly, the object storage server provides the service for the tenant. Specifically, the object storage server may provide, for the tenant, a bucket domain name used to locate a bucket resource, and the tenant operates the object storage client to access a bucket by using the bucket domain name, so that the tenant can upload data to the bucket, and download data from the bucket. The uploaded data is stored in the bucket as an object.

The bucket is set in a storage device, for example, a physical disk in the following, and the bucket may be used to store the object.

### 3. Object (object)

An object is a basic data storage unit of an OBS. One object is actually a combination of data of one file and related attribute information (metadata) of the file. Data uploaded by a tenant to the OBS is stored in a bucket as an object. An object includes three parts: a key (key), the metadata (metadata), and data (data).

The key is a name of the object. For example, the key is a character sequence that is encoded in UTF-8 and whose length is greater than 0 and does not exceed 1024. Each object in one bucket has a unique object key.

The metadata is description information of the object, and includes system metadata and tenant metadata. The metadata is uploaded to an object storage service as a key-value (key-value) pair. The system metadata is automatically generated by the object storage service and is used to process object data. The system metadata includes a date (date), a content length (content length), last-modify (last-modify) time, MD5 encrypted content (content-MD5), and the like. The tenant metadata is specified when the tenant uploads the object to the bucket, and is object description information customized by the tenant.

The data is data content uploaded by the tenant.

Usually, the object may be managed as a file. However, to facilitate data management by the tenant, the object storage service provides a manner for simulating a folder: adding "/" to a name of the object, for example, "test/123.jpg". In this case, "test" is simulated as a folder, and "123.jpg" is simulated as a file name in the "test" folder. Actually, the object name is "test/123.jpg", and the data is a 123.jpg file.

4. A dictionary order (dictionary order) is also referred to an alphabetical order (alphabetical order), an order, or the like, and an original meaning is to represent an order of an English word in a dictionary. In the computer field, the dictionary order is extended to a size relationship between any two strings. For two strings, a size relationship depends on a relationship between values of American standard code for information interchange (American standard code for information interchange, ASCII) of 1^{st} different characters that are from left to right and that are of the two strings.

5. A regular expression is a logical formula for operating a string. The regular expression is a "rule string" including predefined specific characters and a combination of these specific characters, to express filtering logic of strings.

FIG. 2 is a diagram of an architecture of an object storage system to which this application is applicable. The object storage system includes an object storage client 10 and an object storage server 20.

The object storage client 10 may be disposed in a terminal device. The terminal device may be a mobile phone, a notebook computer, a tablet computer, a palmtop computer, a wireless terminal in a smart city, or a wireless device in a smart home.

The object storage server 20 is configured to manage one or more storage devices.

The object storage server 20 may be disposed in a service device. The service device is separately connected to the terminal device and the storage device managed by the object storage server 20. For example, the service device is connected to the storage device through a switching device. For another example, the service device is connected to the terminal device through a remote connection gateway.

A tenant can log in to the object storage server 20 by using an account on the object storage client 10, and create a bucket, configure a bucket name, and so on through the object storage server 20. After detecting an operation (for example, operations of creating the bucket and configuring the bucket name) of the tenant, the object storage server 20 may deliver a creation instruction to the storage device. The creation instruction includes information such as the bucket name and a bucket domain name, and the creation instruction is used to notify the storage device to create the bucket and store the information such as the bucket name and the bucket domain name.

After the bucket is created, the tenant may further access the bucket domain name, locate the bucket in the storage device, upload an object and download the object from the bucket, and so on by operating the object storage client 10.

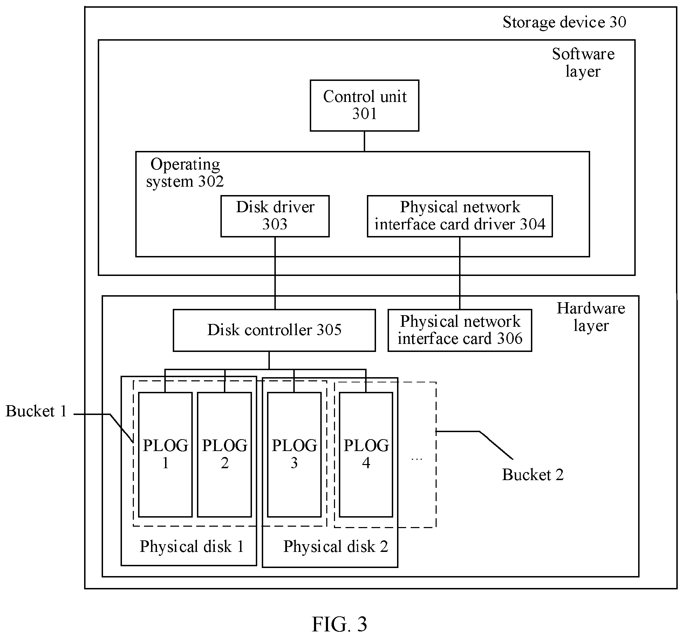

The following describes a structure of the storage device. FIG. 3 is an example of a diagram of a structure of a storage device 30.

The storage device 30 includes a software layer and a hardware layer. The hardware layer includes a disk controller 305, a physical network interface card 306, a physical disk 1, and a physical disk 2 (herein, only an example in which the storage device 30 includes two physical disks is used for description, and a quantity of physical disks in the storage device is not limited in this application). The software layer includes a control unit 301 and an operating system 302. The control unit 301 is run on the operating system 302. The operating system 302 includes a disk driver 303 and a physical network interface card driver 304. An object storage server 20 may communicate with the control unit 301 through the physical network interface card 306. The control unit 301 controls, through the disk driver 303, the disk controller 305 to set the physical disk 1 and the physical disk 2 as a plurality of persistent storage units (persistence logs, PLOGs).

After receiving a creation instruction of a bucket 1, the object storage server 20 notifies the control unit 301 to create the bucket 1. The control unit 301 creates the bucket 1 on the physical disk 1 and the physical disk 2 at the hardware layer through the operating system, where PLOGs of the bucket 1 are distributed in the physical disk 1 and the physical disk 2, and the control unit 301 stores information such as a bucket name and a bucket domain name of the bucket 1.

When a tenant needs to upload an object to the bucket 1 through an object storage client 10, the tenant may trigger, through the object storage client 10, the storage device 30 to write the object into the bucket 1. For example, the control unit 301 in the storage device 30 may write the object into the bucket 1.

When the tenant needs to download the object in the bucket 1 through the object storage client 10, the tenant may trigger, through the object storage client 10, the storage device 30 to read the object from the bucket 1. For example, the control unit 301 in the storage device 30 may obtain the object from the bucket 1, and feed back the object to the object storage client 10.

When an object storage server creates a bucket, a sequential distribution manner is used by default as a manner for storing an object in the bucket, and a requirement of the tenant for storing objects having different distribution characteristics cannot be met.

Therefore, this application provides an object storage configuration method. When creating the bucket, the object storage server provides a selection function for the tenant. Specifically, the tenant may select, on a configuration interface of an object storage client, a manner (denoted as a target distribution manner) for storing an object in a logical partition of the bucket. The object storage client provides the target distribution manner for the object storage server, and the object storage server creates the bucket based on the target distribution manner.

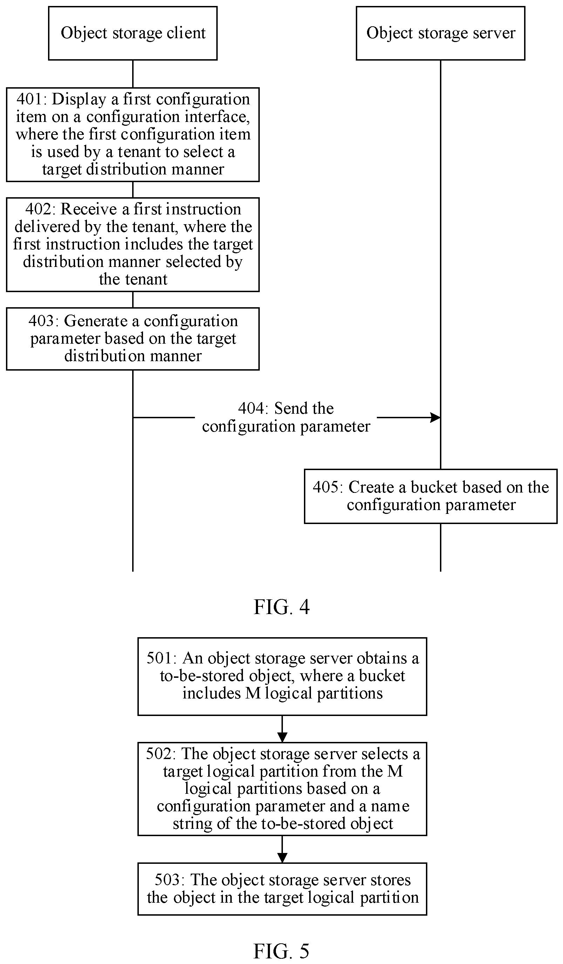

FIG. 4 is a schematic flowchart of an example of an object storage service-based configuration method according to this application.

Step 401: An object storage client displays a first configuration item on a configuration interface, where the first configuration item is used by a tenant to select a target distribution manner.

For example, the first configuration item includes a plurality of distribution manners, and the plurality of distribution manners include a sequential distribution manner and a discrete distribution manner. It should be noted that the foregoing is merely an example of two distribution manners provided in this application. The first configuration item may include a distribution manner in another form. This is not limited in this application.

The sequential distribution manner may also be referred to as dictionary order-based distribution or range (range) distribution. For example, the sequential distribution manner indicates an object storage server to select a target logical partition from a plurality of logical partitions of a bucket based on characters from left to right in a name string of a to-be-stored object, and store the to-be-stored object in the target logical partition.

The discrete distribution manner may also be referred to as hash distribution. For example, the discrete distribution manner indicates the object storage server to determine a hash value of the name string of the to-be-stored object, to select the target logical partition from the plurality of logical partitions of the bucket based on the hash value, and store the object in the target logical partition.

For example, the tenant may log in to the object storage server by using an account on the object storage client, and operate the object storage client, so that the object storage client displays a configuration interface for creating the bucket. The tenant may select, based on a characteristic of the name string of the to-be-stored object, the target distribution manner from the first configuration item displayed on the configuration interface. For example, when the name string of the to-be-stored object is a random value or a random prefix, the tenant selects the sequential distribution manner as the target distribution manner; or when the name string of the to-be-stored object is a sequential prefix (for example, a date or a sequential number), the tenant selects the discrete distribution manner as the target distribution manner.

Step 402: When the tenant selects the target distribution manner from the first configuration item, the object storage client receives a first instruction delivered by the tenant, where the first instruction includes the target distribution manner selected by the tenant from the plurality of distribution manners.

Step 403: The object storage client generates a configuration parameter based on the target distribution manner included in the first instruction. The configuration parameter includes the target distribution manner. The configuration parameter is used by the object storage server to create the bucket.

Step 404: The object storage client sends the configuration parameter to the object storage server.

Step 405: The object storage server creates the bucket based on the configuration parameter. Specifically, the object storage server creates the bucket, and adds the configuration parameter to a bucket attribute, in other words, the bucket attribute includes the target distribution manner selected by the tenant.

In a possible manner, when creating the bucket, the object storage server further determines an initial quantity m of logical partitions included in the bucket, and divides the created bucket into m logical partitions, where m is an integer greater than 1.

In a possible example, a quantity of logical partitions included in the bucket is a fixed value, in other words, there is no logical partition splitting or merging. For example, if the initial quantity m of logical partitions is equal to 4096, when creating the bucket, the object storage server may divide the bucket into 4096 logical partitions. Further, the quantity of logical partitions in the bucket is always 4096.

In another possible example, the quantity of logical partitions included in the bucket is not a fixed value, in other words, the quantity of logical partitions in the bucket increases with a data amount of an object stored in the bucket. For example, when creating the bucket, the object storage server determines the initial quantity m of logical partitions, where m=10, and the object storage server divides the bucket into 10 logical partitions (denoted as logical partitions 1 to 10). As the data amount of the object stored in the bucket increases, the object storage server may further divide one logical partition into two logical partitions. For example, when determining that a data amount of an object stored in the logical partition 1 reaches an upper storage limit of the logical partition 1, the object storage server may split the logical partition 1 into a logical partition 1-1 and a logical partition 1-2.

In addition, when the target distribution manner selected by the tenant is the discrete distribution manner, the tenant may further select a target discrete rule in the discrete distribution manner. The target discrete rule is used by the object storage server to determine a manner for selecting a target string from the name string of the to-be-stored object, to determine a hash value of the target string, select the target logical partition from the plurality of logical partitions of the bucket based on the hash value of the target string, and store the to-be-stored object in the target logical partition.

Specifically, when the tenant selects the discrete distribution manner, the object storage client further displays a second configuration item on the configuration interface, where the second configuration item includes a plurality of discrete rules. The plurality of discrete rules include one or more of the following:
a first discrete rule, indicating the object storage server to combine a plurality of characters in a prefix of the name string of the to-be-stored object into the target string;
a second discrete rule, indicating the object storage server to combine the first N characters in the name string of the to-be-stored object into the target string, where N is a positive integer; and
a third discrete rule, indicating the object storage server to combine, into the target string, a plurality of characters that are in the name string of the to-be-stored object and that satisfy a regular expression.

It should be noted that the first discrete rule can further indicate the object storage server to use one character in the prefix of the name string of the to-be-stored object as a target character; the second discrete rule can further indicate the object storage server to use a 1^{st} character in the name string of the to-be-stored object as the target character; and the third discrete rule can further indicate the object storage server to use one character that is in the name string of the to-be-stored object and that satisfies the regular expression as the target character. It may be understood that, when the discrete rule indicates one character, the indicated character may be referred to as the target character; and when the discrete rule indicates a plurality of characters, a string including the plurality of indicated characters may be referred to as the target string. In this application, the target string is used as an example for description. For an implementation in which the discrete rule indicates one target character, refer to the related descriptions of the target string.

It should be noted that the foregoing is merely an example of three discrete rules provided in this application. The second configuration item may include a discrete rule in another form. This is not limited in this application.

The tenant may select, based on the plurality of discrete rules that are in the second configuration item and that are displayed on the configuration interface, one of the plurality of discrete rules as the target discrete rule. Correspondingly, the object storage client further receives a second instruction delivered by the tenant, where the second instruction includes the target discrete rule.

Further, after selecting the target discrete rule, the tenant may further set a parameter of the target discrete rule.

Example 1: After selecting the first discrete rule from the plurality of discrete rules of the second configuration item, the tenant may further set a prefix in a parameter configuration item of the first discrete rule. Specifically, after receiving the second instruction of the tenant, the object storage client obtains the first discrete rule from the second instruction, and then displays the parameter configuration item of the first discrete rule on the configuration interface. The tenant may enter the prefix in the parameter configuration item of the first discrete rule. Correspondingly, the object storage client receives a third instruction of the tenant, and obtains a parameter (that is, the prefix) of the first discrete rule from the third instruction.

For example, the tenant determines that to-be-stored objects may be classified into three categories: musics "musics", logs "logs", and photos "photos". After selecting the first discrete rule, the tenant may continue to enter three prefixes in the parameter configuration item of the first discrete rule: "musics", "logs", and "photos".

Example 2: After selecting the second discrete rule from the plurality of discrete rules of the second configuration item, the tenant may further set a value of a quantity N in a parameter configuration item of the second discrete rule. Specifically, after receiving the second instruction of the tenant, the object storage client obtains the second discrete rule from the second instruction, and then displays the parameter configuration item of the second discrete rule on the configuration interface. The tenant may enter the value of the quantity N in the parameter configuration item of the second discrete rule. Correspondingly, the object storage client receives the third instruction of the tenant, and obtains a parameter (that is, the value of N) of the second discrete rule from the third instruction.

For example, the tenant determines that a to-be-stored object is of a video category, and a name string of the to-be-stored object usually starts with "videos/date". For example, the name string of the to-be-stored object is "videos/2020/01/video1.wmv", where "videos" occupies seven characters, and "year" in the date occupies four characters. In this case, after selecting the second discrete rule, the tenant may enter N=11 in the parameter configuration item of the second discrete rule.

Example 3: The tenant selects the third discrete rule from the plurality of discrete rules of the second configuration item, and may further set the regular expression in a parameter configuration item of the third discrete rule. Specifically, after receiving the second instruction of the tenant, the object storage client obtains the third discrete rule from the second instruction, and then displays the parameter configuration item of the third discrete rule on the configuration interface. The tenant may enter the regular expression in the parameter configuration item of the third discrete rule. Correspondingly, the object storage client receives the third instruction of the tenant, and obtains a parameter (that is, the regular expression) of the third discrete rule from the third instruction.

For example, the tenant determines that a to-be-stored object is of a photo category, and the to-be-stored object is usually named by creation time, to be specific, a name string of the to-be-stored object includes the creation time, and the creation time is usually at a middle position of the name string of the to-be-stored object. In this case, after selecting the third discrete rule, the tenant may enter a regular expression "*2022-01*", a regular expression "*2022-02*", a regular expression "*2022-03*", and the like in the parameter configuration item of the third discrete rule.

In a possible implementation, after receiving the first instruction delivered by the tenant, the object storage client further receives the second instruction and the third instruction that are delivered by the tenant. The object storage client generates a configuration parameter based on the target distribution manner in the first instruction, the target discrete rule in the second instruction, and a parameter of a target discrete rule in the third instruction. The configuration parameter includes the target distribution manner, the target discrete rule, and the parameter of the target discrete rule. The object storage client sends the configuration parameter to the object storage server. The object storage server receives the configuration parameter, creates the bucket based on the configuration parameter, and adds the configuration parameter to the bucket attribute.

In a second implementation, after receiving the first instruction delivered by the tenant, the object storage client sends a first configuration parameter to the object storage server, where the first configuration parameter includes the target distribution manner. The object storage client further receives the second instruction and the third instruction that are delivered by the tenant, and then sends a second configuration parameter to the object storage server, where the second configuration parameter includes the target discrete rule and the parameter of the target discrete rule. Correspondingly, the object storage server creates the bucket based on the first configuration parameter and the second configuration parameter, and adds the first configuration parameter and the second configuration parameter to the bucket attribute.

In a third implementation, after receiving the first instruction delivered by the tenant, the object storage client sends the first configuration parameter to the object storage server, where the first configuration parameter includes the target distribution manner, and the object storage server creates the bucket based on the first configuration parameter, and adds the first configuration parameter to the bucket attribute. Then, the object storage client further receives the second instruction and the third instruction that are delivered by the tenant, and sends the second configuration parameter to the object storage server, where the second configuration parameter includes the target discrete rule and the parameter of the target discrete rule. Correspondingly, the object storage server adds the second configuration parameter to the bucket attribute.

In this application, the first configuration parameter and the second configuration parameter may be collectively referred to as the configuration parameter.

Certainly, the object storage client may alternatively send one or more of the target distribution manner, the target discrete rule, and the parameter of the target discrete rule to the object storage server in another manner. This is not limited in this application.

FIG. 5 is a schematic flowchart of an example of an object storage service-based storage method according to this application.

Step 501: An object storage server obtains an object (referred to as a to-be-stored object) to be stored in a bucket. In this case, the bucket includes M logical partitions, and M is an integer greater than 1. For example, when a quantity of logical partitions included in the bucket is a fixed value, M is equal to m. When the quantity of logical partitions included in the bucket is not a fixed value, values of M and m are the same or different.

Step 502: The object storage server selects a target logical partition from the M logical partitions based on a configuration parameter and a name string of the to-be-stored object.

Implementation 1: The configuration parameter includes a target distribution manner.

If the target distribution manner is a sequential distribution manner, the object storage server selects the target logical partition from the M logical partitions of the bucket based on characters from left to right in the name string of the to-be-stored object, and stores the to-be-stored object in the target logical partition. For example, the bucket includes eight logical partitions (denoted as a logical partition 1 to a logical partition 8), and the eight logical partitions respectively correspond to initials "A" to "H". When an initial in the name string of the to-be-stored object is "A", the object storage server stores the to-be-stored object in the logical partition 1; or when an initial in the name string of the to-be-stored object is "H", the object storage server stores the to-be-stored object in the logical partition 8.

If the target distribution manner is a discrete distribution manner, the object storage server determines a hash value of the name string of the to-be-stored object, selects the target logical partition from the M logical partitions of the bucket based on a mapping relationship between hash values and a plurality of logical partitions, and stores the to-be-stored object in the target logical partition.

For example, the object storage server obtains a remainder by dividing the hash value by M, and selects the target logical partition from the M logical partitions of the bucket based on the remainder. For example, if the hash value that is of the name string of the to-be-stored object and that is determined by the object storage server is 101, and the bucket includes 10 logical partitions, the object storage server obtains a remainder 1 by dividing 101 by 10. The remainder 1 corresponds to the logical partition 1; in this case, the logical partition 1 may be used as the target logical partition.

Certainly, the object storage server may further select, from the M logical partitions based on another mapping relationship between hash values and the M logical partitions of the bucket, the target logical partition corresponding to the hash value. This is not limited in this application.

Implementation 2: The configuration parameter includes a target distribution manner, a target discrete rule, and a parameter of the target discrete rule.

If the target distribution manner is a sequential distribution manner, the object storage server selects the target logical partition from the M logical partitions of the bucket based on characters from left to right in the name string of the to-be-stored object, and stores the to-be-stored object in the target logical partition. For a specific implementation, refer to the descriptions in the implementation 1.

If the target distribution manner is a discrete distribution manner, the object storage server first selects a target string of the to-be-stored object from the name string of the to-be-stored object based on the target discrete rule and the parameter of the target discrete rule in the configuration parameter. The object storage server then determines a hash value of the target string of the to-be-stored object, selects the target logical partition from the M logical partitions of the bucket based on a mapping relationship between hash values and a plurality of logical partitions, and stores the to-be-stored object into the target logical partition. The following first describes an implementation in which the object storage server determines the target string of the to-be-stored object.

When the target discrete rule is a first discrete rule, the object storage server selects, from the name string of the to-be-stored object based on the first discrete rule and a parameter (that is, a prefix) of the first discrete rule, a plurality of characters in the prefix to form the target string. For example, parameters of the first discrete rule include a prefix "musics", a prefix "logs", and a prefix "photos". The object storage server extracts a target string "musics" from a name string "musics/my.mp3" of the to-be-stored object, extracts a target string "logs" from a name string "logs/01/date.txt" of the to-be-stored object, and extracts a target string "photos" from a name string "photos/february/sample.jpg" of the to-be-stored object.

When the target discrete rule is a second discrete rule, the object storage server selects the first N characters from the name string of the to-be-stored object based on the second discrete rule and a parameter (that is, a value of N) of the second discrete rule to form the target string. For example, the parameter of the second discrete rule includes "N=11". The object storage server extracts a target string "videos/2020" from a name string "videos/2020/01/video1.wmv" of the to-be-stored object, extracts a target string "videos/2021" from a name string "videos/2021/05/video1.wmv" of the to-be-stored object, and so on.

When the target discrete rule is a third discrete rule, the object storage server selects, from the name string of the to-be-stored object based on the third discrete rule and a parameter (that is, a regular expression) of the third discrete rule, a plurality of characters that satisfy the regular expression to form the target string. For example, the parameter of the third discrete rule includes a regular expression "*2022-01*", a regular expression "*2022-02*", and a regular expression "*2022-03*". The object storage server extracts a target string "2022-01" from a name string "photos/Elsa/2022-01-10/file1.1" of the to-be-stored object, extracts a target string "2022-01" from a name string "photos/Elsa/2022-01-11/file2.1" of the to-be-stored object, extracts a target string "2021-02" from a name string "photos/Kim/2021-02-05/file3.1" of the to-be-stored object, and so on.

After extracting the target string from the name string of the to-be-stored object, the object storage server may further determine the hash value of the target string, select the target logical partition from the M logical partitions of the bucket based on the mapping relationship between the hash values of the target string and the plurality of logical partitions, and store the to-be-stored object in the target logical partition. For example, the object storage server obtains a remainder by dividing the hash value of the target string by M, and selects the target logical partition from the M logical partitions of the bucket based on the remainder. For an example, refer to the foregoing implementation 1. Details are not described herein again.

Step 503: The object storage server stores the object in the target logical partition.

The following describes, with reference to specific examples, a representation form in which the object is stored in different logical partitions of the bucket when a tenant selects the target discrete rule and the parameter of the target discrete rule.

Example 1: The tenant determines that to-be-stored objects include three categories: musics, logs, and photos. When creating the bucket through an object storage client, the tenant may set a manner in which the to-be-stored objects are discretely distributed to different logical partitions of the bucket based on the categories of the to-be-stored objects.

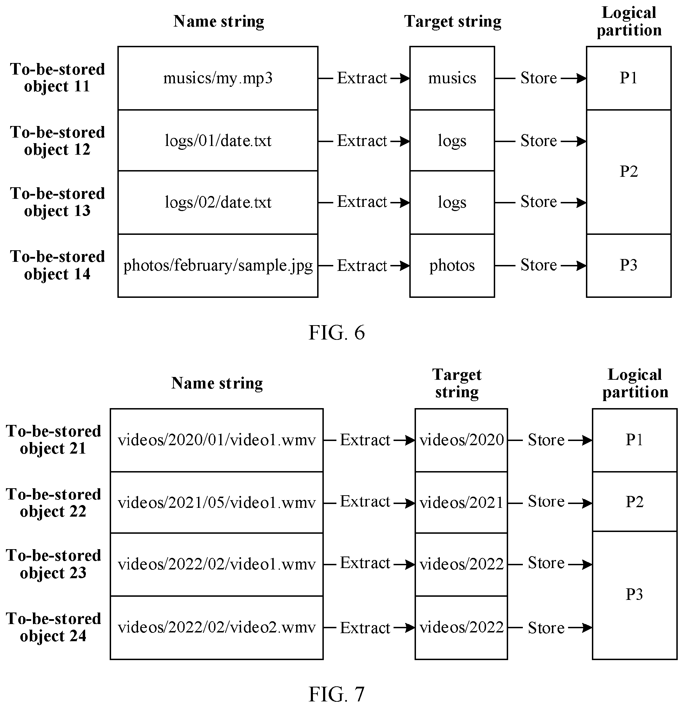

FIG. 6 is a diagram of an example of discrete distribution corresponding to a first discrete rule. A bucket includes three logical partitions (denoted as P1, P2, and P3), and parameters of the first discrete rule include a prefix "musics", a prefix "logs", and a prefix "photos".

The object storage server extracts a target string "musics" from a name string "musics/my.mp3" of a to-be-stored object 11, and stores the to-be-stored object 11 in P1 based on a hash value of "musics".

The object storage server extracts a target string "logs" from a name string "logs/01/date.txt" of a to-be-stored object 12, and stores the to-be-stored object 12 in P2 based on a hash value of "logs".

The object storage server extracts a target string "logs" from a name string "logs/02/date.txt" of a to-be-stored object 13, and stores the to-be-stored object 13 in P2 based on a hash value of "logs".

The object storage server extracts a target string "photos" from a name string "photos/february/sample.jpg" of a to-be-stored object 14, and stores the to-be-stored object 14 in P3 based on a hash value of "photos".

It may be understood that although the name strings of the to-be-stored object 12 and the to-be-stored object 13 are different, the target strings (that is, categories) of the to-be-stored object 12 and the to-be-stored object 13 are the same. In this case, the object storage server may store both the to-be-stored object 12 and the to-be-stored object 13 in P2. In other words, the object storage server distributes different categories of to-be-stored objects to different partitions.

Example 2: The tenant determines that the to-be-stored object is of a video category, and an object of the video category is named based on creation time. When creating the bucket through an object storage client, the tenant may set a manner in which to-be-stored objects are discretely distributed to different logical partitions of the bucket based on categories and creation time of the to-be-stored objects.

FIG. 7 is an example of a diagram of discrete distribution corresponding to a second discrete rule. A bucket includes three logical partitions (denoted as P1, P2, and P3), and a parameter of the second discrete rule includes "N=11". The first 11 characters (that is, a target string) specifically include a category of a to-be-stored object and a creation year in creation time.

The object storage server extracts a target string "videos/2020" from a name string "videos/2020/01/video1.wmv" of a to-be-stored object 21, and stores the to-be-stored object 21 in P1 based on a hash value of "videos/2020".

The object storage server extracts a target string "videos/2021" from a name string "videos/2021/05/video1.wmv" of a to-be-stored object 22, and stores the to-be-stored object 22 in P2 based on a hash value of "videos/2021".

The object storage server extracts a target string "videos/2022" from a name string "videos/2022/02/video1.wmv" of a to-be-stored object 23, and stores the to-be-stored object 23 in P3 based on a hash value of "videos/2022".

The object storage server extracts a target string "videos/2022" from a name string "videos/2022/02/video2.wmv" of a to-be-stored object 24, and stores the to-be-stored object 24 in P3 based on a hash value of "videos/2022".

It may be understood that although the name strings of the to-be-stored object 23 and the to-be-stored object 24 are different, the target strings (that is, the categories and the creation years in the creation time) of the to-be-stored object 23 and the to-be-stored object 24 are the same. In this case, the object storage server may distribute both the to-be-stored object 23 and the to-be-stored object 24 to P3. It may also be understood that the object storage server distributes, to different partitions, to-be-stored objects that are created in different years.

Example 3: The tenant determines that the to-be-stored object is of a photo category, the to-be-stored object of the photo category is named based on creation time, and the creation time is usually at a middle position of a name string of the to-be-stored object. When creating the bucket through an object storage client, the tenant may set a manner in which to-be-stored objects are discretely distributed to different logical partitions of the bucket based on creation time of the to-be-stored objects.

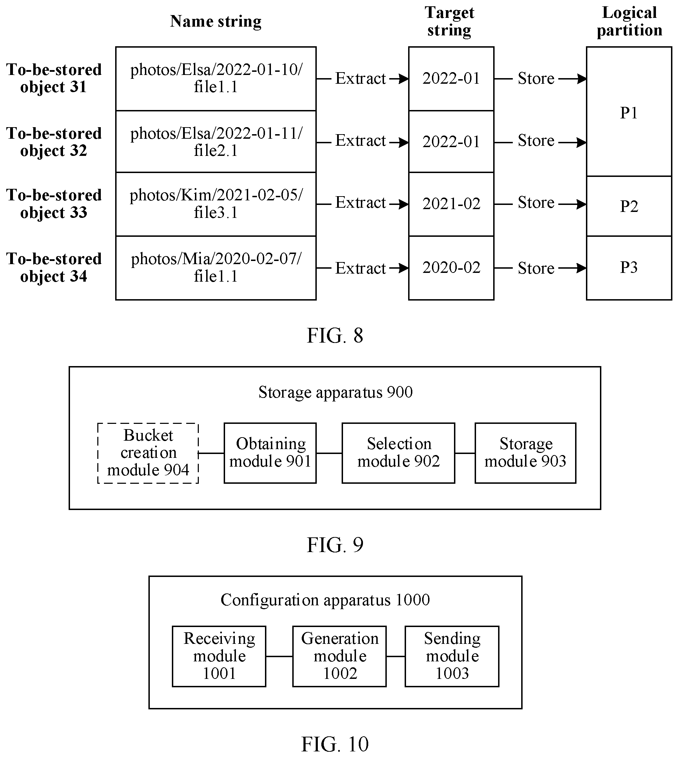

FIG. 8 is an example of a diagram of discrete distribution corresponding to a third discrete rule. A bucket includes three logical partitions (denoted as P1, P2, and P3), and parameters of the third discrete rule include a regular expression "*2022-01*", a regular expression "*2022-02*", and a regular expression "*2022-03*". A target string that satisfies a regular expression specifically includes creation time (including a creation year and a creation month) of a to-be-stored object.

The object storage server extracts a target string "2022-01" from a name string "photos/Elsa/2022-01-10/file1.1" of a to-be-stored object 31, and stores the to-be-stored object 31 in P1 based on a hash value of "2022-01".

The object storage server extracts a target string "2022-01" from a name string "photos/Elsa/2022-01-11/file2.1" of a to-be-stored object 32, and stores the to-be-stored object 32 in P1 based on a hash value of "2022-01".

The object storage server extracts a target string "2021-02" from a name string "photos/Kim/2021-02-05/file3.1" of a to-be-stored object 33, and stores the to-be-stored object 33 in P2 based on a hash value of "2021-02".

The object storage server extracts a target string "2020-02" from a name string "photos/Mia/2020-02-07/file1.1" of a to-be-stored object 34, and stores the to-be-stored object 34 in P3 based on a hash value of "2020-02".

It may be understood that although the name strings of the to-be-stored object 31 and the to-be-stored object 32 are different, the target strings (that is, the creation years and the creation months in the creation time) of the to-be-stored object 31 and the to-be-stored object 32 are the same. In this case, the object storage server may distribute both the to-be-stored object 31 and the to-be-stored object 32 to P1. It may also be understood that the object storage server distributes objects with different creation time to different partitions.

Optionally, when the object storage server stores a plurality of to-be-stored objects in a same target logical partition, the object storage server may arrange the plurality of to-be-stored objects in the target logical partition in a sequential distribution manner based on name strings of the plurality of to-be-stored objects. When the object storage server determines that a total data amount of objects stored in a logical partition has reached an upper storage limit of the logical partition, the object storage server splits the logical partition into two logical partitions in a sequential distribution manner of a plurality of objects that have been stored in the logical partition. Then, the object storage server stores a to-be-stored object in one of the two logical partitions based on a target string of the to-be-stored object in the sequential distribution manner.

In the foregoing technical solution, the object storage server determines, based on the target distribution manner selected by the tenant and a name string of an object to be stored in the bucket, to store the object in a logical partition (that is, the target logical partition) in the bucket. The target distribution manner may be specifically selected by the tenant based on a distribution characteristic of an object that the tenant expects to store. This helps meet a requirement of the tenant for storing objects having different distribution characteristics.

Further, when the target distribution manner is the discrete distribution manner, the object storage server may first determine, based on the target discrete rule selected by the tenant and the name string of the object to be stored in the bucket, a target string of the object, and then distribute, by performing hashing on the target string of the object, different objects having a same target string to a same partition of the bucket. The target discrete rule may be specifically selected by the tenant based on the distribution characteristic of the object that the tenant expects to store. This helps meet the requirement of the tenant for storing the objects having different distribution characteristics.

This application further provides an object storage service-based storage apparatus 900. The storage apparatus 900 is used in an object storage server. For a diagram of a structure of the storage apparatus 900, refer to FIG. 9. The storage apparatus 900 includes: an obtaining module 901, configured to obtain an object to be stored in a bucket, where the bucket includes a plurality of logical partitions; a selection module 902, configured to select a target logical partition from the plurality of logical partitions based on a configuration parameter and a name string of the object, where the configuration parameter includes a target distribution manner, and the target distribution manner is selected by a tenant from a plurality of distribution manners; and a storage module 903, configured to store the object in the target logical partition.

In a possible implementation, the plurality of distribution manners include a sequential distribution manner and a discrete distribution manner.

In a possible implementation, when the target distribution manner is the discrete distribution manner, when selecting the target logical partition from the plurality of logical partitions based on the configuration parameter and the name string of the object, the selection module 902 is specifically configured to: determine a hash value of the name string of the object based on the discrete distribution manner in the configuration parameter; and select the target logical partition based on a mapping relationship between the hash value and the plurality of logical partitions.

In a possible implementation, when the target distribution manner is the discrete distribution manner, the configuration parameter further includes a target discrete rule, and the target discrete rule is selected by the tenant from a plurality of discrete rules. When selecting the target logical partition from the plurality of logical partitions based on the configuration parameter and the name string of the object, the selection module 902 is specifically configured to: select a target string from the name string of the object based on the discrete distribution manner and the target discrete rule that are in the configuration parameter; determine a hash value of the target string; and select the target logical partition based on a mapping relationship between the hash value and the plurality of logical partitions.

In a possible implementation, the plurality of discrete rules include one or more of the following: a first discrete rule, indicating the object storage server to combine a plurality of characters in a prefix of a name string into a target string; a second discrete rule, indicating the object storage server to combine the first N characters in the name string into the target string, where N is an integer greater than 1; and a third discrete rule, indicating the object storage server to combine, into the target string, a plurality of characters in the name string that satisfy a regular expression.

In a possible implementation, the storage apparatus 900 further includes a bucket creation module 904. Before the obtaining module 901 obtains the to-be-stored object, the bucket creation module 904 is configured to: receive a configuration parameter from an object storage client; and create the bucket based on the configuration parameter.

The obtaining module 901, the selection module 902, the storage module 903, and the bucket creation module 904 may all be implemented by using software, or may all be implemented by using hardware. For example, the following uses the selection module 902 as an example to describe an implementation of the selection module 902. Similarly, for implementations of the obtaining module 901, the storage module 903, and the bucket creation module 904, refer to the implementation of the selection module 902.

The module is used as an example of a software functional unit, and the selection module 902 may include code run on a computing instance. The computing instance may include at least one of a physical host (a computing device), a virtual machine, and a container. Further, there may be one or more computing instances. For example, the selection module 902 may include code run on a plurality of hosts/virtual machines/containers. It should be noted that, the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Usually, one region may include a plurality of AZs.

Similarly, the plurality of hosts/virtual machines/containers configured to run the code may be distributed in a same virtual private cloud (virtual private cloud, VPC), or may be distributed in a plurality of VPCs. Usually, one VPC is set in one region. A communication gateway needs to be set in each VPC for communication between two VPCs in a same region and cross-region communication between VPCs in different regions. VPCs are interconnected through the communication gateway.

The module is used as an example of a hardware functional unit, and the selection module 902 may include at least one computing device, for example, a server. Alternatively, the selection module 902 may be a device implemented by using an application-specific integrated circuit (application-specific integrated circuit, ASIC) or a programmable logic device (programmable logic device, PLD), or the like. The PLD may be implemented by a complex programmable logical device (complex programmable logical device, CPLD), a field-programmable gate array (field-programmable gate array, FPGA), generic array logic (generic array logic, GAL), or any combination thereof.

A plurality of computing devices included in the selection module 902 may be distributed in a same region, or may be distributed in different regions. The plurality of computing devices included in the selection module 902 may be distributed in a same AZ, or may be distributed in different AZs. Similarly, the plurality of computing devices included in the selection module 902 may be distributed in a same VPC, or may be distributed in a plurality of VPCs. The plurality of computing devices may be any combination of computing devices such as a server, an ASIC, a PLD, a CPLD, an FPGA, and a GAL.

It should be noted that, in another embodiment, the selection module 902 may be configured to perform any step performed by the object storage server in the method related to FIG. 4 or FIG. 5, the obtaining module 901 may be configured to perform any step performed by the object storage server in the method related to FIG. 4 or FIG. 5, the storage module 903 may be configured to perform any step performed by the object storage server in the method related to FIG. 4 or FIG. 5, or the bucket creation module 904 may be configured to perform any step performed by the object storage server in the method related to FIG. 4 or FIG. 5. Steps that the obtaining module 901, the selection module 902, the storage module 903, and the bucket creation module 904 are responsible for implementing may be specified as required. The obtaining module 901, the selection module 902, the storage module 903, and the bucket creation module 904 separately implement different steps of the object storage server in the method related to FIG. 4 or FIG. 5, to implement all functions of the object storage service-based storage apparatus 900.

This application further provides an object storage service-based configuration apparatus 1000. The configuration apparatus 1000 is used in an object storage client. For a diagram of a structure of the configuration apparatus 1000, refer to FIG. 10. The configuration apparatus 1000 includes: a receiving module 1001, configured to receive a first instruction, where the first instruction includes a target distribution manner selected by a tenant from a plurality of distribution manners; a generation module 1002, configured to generate a configuration parameter, where the configuration parameter includes the target distribution manner; and a sending module 1003, configured to send the configuration parameter to an object storage server, where the configuration parameter is used by the object storage server to create a bucket.

In a possible implementation, the plurality of distribution manners include a sequential distribution manner and a discrete distribution manner.

In a possible implementation, when the target distribution manner is the discrete distribution manner, after receiving the first instruction, the receiving module 1001 is further configured to receive a second instruction, where the second instruction includes a target discrete rule selected by the tenant from a plurality of discrete rules, and the configuration parameter further includes the target discrete rule.

In a possible implementation, the plurality of discrete rules include one or more of the following: a first discrete rule, indicating the object storage server to use one or more characters in a prefix of a name string as a target string; a second discrete rule, indicating the object storage server to use first N characters in the name string as the target string, where N is a positive integer; and a third discrete rule, indicating the object storage server to use, as the target string, characters in the name string that satisfy a regular expression.

The receiving module 1001, the generation module 1002, and the sending module 1003 may all be implemented by using software, or may all be implemented by using hardware. For a specific implementation, refer to the descriptions of the obtaining module 901, the selection module 902, the storage module 903, and the bucket creation module 904 in the embodiment related to FIG. 9.

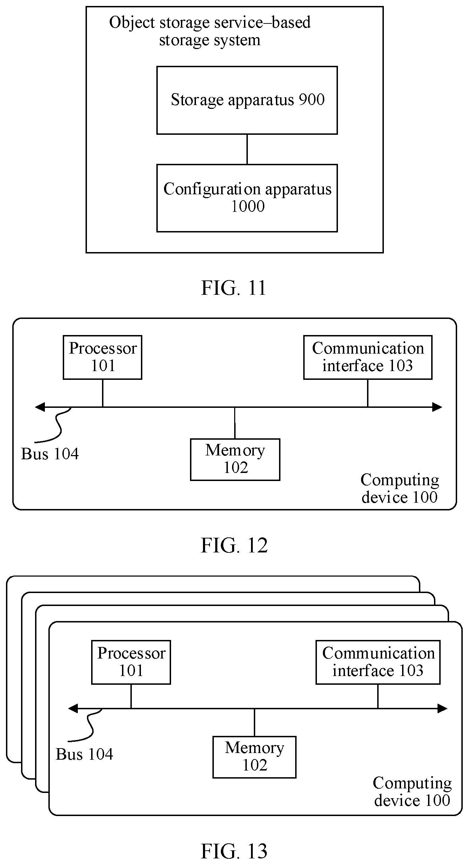

This application further provides an object storage service-based storage system. As shown in FIG. 11, the storage system includes: an object storage service-based storage apparatus 900, configured to implement a function of the object storage server in the embodiment related to FIG. 4 or FIG. 5, and an object storage service-based configuration apparatus 1000, configured to implement a function of the object storage client in the embodiment related to FIG. 4 or FIG. 5.

Both the storage apparatus 900 and the configuration apparatus 1000 may be implemented by using software, or may be implemented by using hardware. For example, the following describes an implementation of the storage apparatus 900. Similarly, for an implementation of the configuration apparatus 1000, refer to the implementation of the storage apparatus 900.

The module is used as an example of a software functional unit, and the storage apparatus 900 may include code run on a compute instance. The computing instance may be at least one of computing devices such as a physical host (a computing device), a virtual machine, and a container. Further, there may be one or more computing devices. For example, the storage apparatus 900 may include code run on a plurality of hosts/virtual machines/containers. It should be noted that the plurality of hosts/virtual machines/containers configured to run the code may be distributed in a same region or may be distributed in different regions. The plurality of hosts/virtual machines/containers configured to run the code may be distributed in a same AZ, or may be distributed in different AZs. Each AZ includes one data center or a plurality of data centers that are geographically close to each other. Usually, one region may include a plurality of AZs.

Similarly, the plurality of hosts/virtual machines/containers configured to run the code may be distributed in a same VPC, or may be distributed in a plurality of VPCs. Usually, one VPC is set in one region. A communication gateway needs to be set in each VPC for communication between two VPCs in a same region and cross-region communication between VPCs in different regions. VPCs are interconnected through the communication gateway.

The module is used as an example of a hardware functional unit, and the storage apparatus 900 may include at least one computing device, for example, a server. Alternatively, the storage apparatus 900 may be a device implemented by using an ASIC, a PLD, or the like. The PLD may be implemented by a CPLD, an FPGA, a GAL, or any combination thereof.

A plurality of computing devices included in the storage apparatus 900 may be distributed in a same region, or may be distributed in different regions. The plurality of computing devices included in the storage apparatus 900 may be distributed in a same AZ, or may be distributed in different AZs. Similarly, the plurality of computing devices included in the storage apparatus 900 may be distributed in a same VPC, or may be distributed in a plurality of VPCs. The plurality of computing devices may be any combination of computing devices such as a server, an ASIC, a PLD, a CPLD, an FPGA, and a GAL.

This application further provides a computing device 100. As shown in FIG. 12, the computing device 100 includes a processor 101, a memory 102, a communication interface 103, and a bus 104. The processor 101, the memory 102, and the communication interface 103 communicate with each other through the bus 104. The computing device 100 may be a server or a terminal device. It should be understood that a quantity of processors and a quantity of memories in the computing device 100 are not limited in this application.

The bus 104 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, the bus is represented by using only one line in FIG. 12. However, this does not indicate that there is only one bus or only one type of bus. The bus 104 may include a path for transferring information between components (for example, the memory 102, the processor 101, and the communication interface 103) of the computing device 100.

The processor 101 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 102 may include a volatile memory (volatile memory), for example, a random access memory (random access memory, RAM). The processor 101 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 102 stores executable program code, and the processor 101 executes the executable program code to separately implement functions of the obtaining module 901, the selection module 902, the storage module 903, and the bucket creation module 904, so as to implement a function of the object storage server in the embodiment related to FIG. 4 or FIG. 5. In other words, the memory 102 stores instructions used to perform the method of the object storage server in the embodiment related to FIG. 4 or FIG. 5.

The memory 102 stores executable program code, and the processor 101 executes the executable program code to separately implement functions of the receiving module 1001, the generation module 1002, and the sending module 1003, so as to implement a function of the object storage client in the embodiment related to FIG. 4 or FIG. 5. In other words, the memory 102 stores instructions used to perform the method of the object storage client in the embodiment related to FIG. 4 or FIG. 5.

The communication interface 103 uses a transceiver module, for example, but not limited to, a network interface card or a transceiver, to implement communication between the computing device 100 and another device or a communication network.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

As shown in FIG. 13, the computing device cluster includes at least one computing device 100. A memory 102 in one or more computing devices 100 in the computing device cluster may store same code for performing a function of the object storage server in the embodiment related to FIG. 4 or FIG. 5. In some possible implementations, the memory 102 in the one or more computing devices 100 in the computing device cluster may alternatively separately store some instructions for performing the function of the object storage server in the embodiment related to FIG. 4 or FIG. 5. In other words, a combination of the one or more computing devices 100 may jointly perform the function of the object storage server in the embodiment related to FIG. 4 or FIG. 5.

An embodiment of this application further provides a computer program product including instructions. The computer program product may be a software or program product that includes the instructions and that can be run on a computing device or stored in any usable medium. When the computer program product is run on at least one computing device, the at least one computing device is enabled to implement the function of the object storage server in the embodiment related to FIG. 4 or FIG. 5, or the at least one computing device is configured to implement the function of the object storage client in the embodiment related to FIG. 4 or FIG. 5.

An embodiment of this application further provides a computer-readable storage medium. The computer-readable storage medium may be any usable medium that can be stored by a computing device, or a data storage device like a data center including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions, and the instructions instruct the computing device to implement a function of the object storage server in the embodiment related to FIG. 4 or FIG. 5, or the instructions are used to implement a function of the object storage client in the embodiment related to FIG. 4 or FIG. 5.

Finally, it should be noted that the foregoing embodiments are only intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the protection scope of the technical solutions of embodiments of the present invention.

## Claims

1. An object storage service-based storage method, wherein the method is applied to an object storage server, and the method comprises:
Obtaining an object to be stored in a bucket, wherein the bucket comprises a plurality of logical partitions;
selecting a target logical partition from the plurality of logical partitions based on a configuration parameter and a name string of the object, wherein the configuration parameter comprises a target distribution manner, and the target distribution manner is selected by a tenant from a plurality of distribution manners; and
storing the object in the target logical partition.

2. The method according to claim 1, wherein the plurality of distribution manners comprise a sequential distribution manner and a discrete distribution manner.

3. The method according to claim 1 or 2, wherein when the target distribution manner is the discrete distribution manner, the selecting a target logical partition from the plurality of logical partitions based on a configuration parameter and a name string of the object comprises:
determining a hash value of the name string of the object based on the discrete distribution manner in the configuration parameter; and
selecting the target logical partition based on a mapping relationship between hash values and the plurality of logical partitions.

4. The method according to any one of claims 1 to 3, wherein when the target distribution manner is the discrete distribution manner, the configuration parameter further comprises a target discrete rule, and the target discrete rule is selected by the tenant from a plurality of discrete rules; and the selecting a target logical partition from the plurality of logical partitions based on a configuration parameter and a name string of the object comprises:
selecting a target string from the name string of the object based on the discrete distribution manner and the target discrete rule that are in the configuration parameter;
determining a hash value of the target string; and
selecting the target logical partition based on a mapping relationship between the hash value and the plurality of logical partitions.

5. The method according to claim 4, wherein the plurality of discrete rules comprise one or more of the following:
a first discrete rule, indicating the object storage server to combine a plurality of characters in a prefix of the name string into the target string;
a second discrete rule, indicating the object storage server to combine the first N characters in the name string into the target string, wherein N is an integer greater than 1; and
a third discrete rule, indicating the object storage server to combine, into the target string, a plurality of characters in the name string that satisfy a regular expression.

6. The method according to any one of claims 1 to 5, wherein before the obtaining a to-be-stored object, the method further comprises:
receiving the configuration parameter from an object storage client; and
creating the bucket based on the configuration parameter.

7. An object storage service-based configuration method, wherein the method is applied to an object storage client, and the method comprises:
receiving a first instruction, wherein the first instruction comprises a target distribution manner selected by a tenant from a plurality of distribution manners;
generating a configuration parameter, wherein the configuration parameter comprises the target distribution manner; and
sending the configuration parameter to an object storage server, wherein the configuration parameter is used by the object storage server to create a bucket.

8. The method according to claim 7, wherein the plurality of distribution manners comprise a sequential distribution manner and a discrete distribution manner.

9. The method according to claim 7 or 8, wherein when the target distribution manner is the discrete distribution manner, after the receiving a first instruction, the method further comprises:
receiving a second instruction, wherein the second instruction comprises a target discrete rule selected by the tenant from a plurality of discrete rules, and the configuration parameter further comprises the target discrete rule.

10. The method according to claim 9, wherein the plurality of discrete rules comprise one or more of the following:
a first discrete rule, indicating the object storage server to combine a plurality of characters in a prefix of a name string into a target string;
a second discrete rule, indicating the object storage server to combine the first N characters in the name string into the target string, wherein N is an integer greater than 1; and
a third discrete rule, indicating the object storage server to combine, into the target string, a plurality of characters in the name string that satisfy a regular expression.

11. An object storage service-based storage apparatus, wherein the apparatus is used in an object storage server, and the apparatus comprises:
an obtaining module, configured to obtain an object to be stored in a bucket, wherein the bucket comprises a plurality of logical partitions;
a selection module, configured to select a target logical partition from the plurality of logical partitions based on a configuration parameter and a name string of the object, wherein the configuration parameter comprises a target distribution manner, and the target distribution manner is selected by a tenant from a plurality of distribution manners; and
a storage module, configured to store the object in the target logical partition.

12. The apparatus according to claim 11, wherein the plurality of distribution manners comprise a sequential distribution manner and a discrete distribution manner.

13. The apparatus according to claim 11 or 12, wherein when the target distribution manner is the discrete distribution manner, when selecting the target logical partition from the plurality of logical partitions based on the configuration parameter and the name string of the object, the selection module is specifically configured to:
determine a hash value of the name string of the object based on the discrete distribution manner in the configuration parameter; and
select the target logical partition based on a mapping relationship between the hash value and the plurality of logical partitions.

14. The apparatus according to any one of claims 11 to 13, wherein when the target distribution manner is the discrete distribution manner, the configuration parameter further comprises a target discrete rule, and the target discrete rule is selected by the tenant from a plurality of discrete rules; and when selecting the target logical partition from the plurality of logical partitions based on the configuration parameter and the name string of the object, the selection module is specifically configured to:
select a target string from the name string of the object based on the discrete distribution manner and the target discrete rule that are in the configuration parameter;
determine a hash value of the target string; and
select the target logical partition based on a mapping relationship between the hash value and the plurality of logical partitions.

15. The apparatus according to claim 14, wherein the plurality of discrete rules comprise one or more of the following:
a first discrete rule, indicating the object storage server to combine a plurality of characters in a prefix of the name string into the target string;
a second discrete rule, indicating the object storage server to combine the first N characters in the name string into the target string, wherein N is an integer greater than 1; and
a third discrete rule, indicating the object storage server to combine, into the target string, a plurality of characters in the name string that satisfy a regular expression.

16. The apparatus according to any one of claims 11 to 15, further comprising a bucket creation module, wherein before the obtaining module obtains the to-be-stored object, the bucket creation module is configured to:
receive the configuration parameter from an object storage client; and
create the bucket based on the configuration parameter.

17. An object storage service-based configuration apparatus, wherein the apparatus is used in an object storage client, and the apparatus comprises:
a receiving module, configured to receive a first instruction, wherein the first instruction comprises a target distribution manner selected by a tenant from a plurality of distribution manners;
a generation module, configured to generate a configuration parameter, wherein the configuration parameter comprises the target distribution manner; and
a sending module, configured to send the configuration parameter to an object storage server, wherein the configuration parameter is used by the object storage server to create a bucket.

18. The apparatus according to claim 17, wherein the plurality of distribution manners comprise a sequential distribution manner and a discrete distribution manner.

19. The apparatus according to claim 17 or 18, wherein when the target distribution manner is the discrete distribution manner, after receiving the first instruction, the receiving module is further configured to:
receive a second instruction, wherein the second instruction comprises a target discrete rule selected by the tenant from a plurality of discrete rules, and the configuration parameter further comprises the target discrete rule.

20. The apparatus according to claim 19, wherein the plurality of discrete rules comprise one or more of the following:
a first discrete rule, indicating the object storage server to combine a plurality of characters in a prefix of a name string into a target string;
a second discrete rule, indicating the object storage server to combine the first N characters in the name string into the target string, wherein N is an integer greater than 1; and
a third discrete rule, indicating the object storage server to combine, into the target string, a plurality of characters in the name string that satisfy a regular expression.

21. An object storage service-based storage system, comprising:
an object storage server and an object storage client, wherein
the object storage server is configured to perform the method according to any one of claims 1 to 6; and
the object storage client is configured to perform the method according to any one of claims 7 to 10.

22. A computing device cluster, comprising at least one computing device, wherein each computing device comprises a processor and a memory, wherein
the processor of the at least one computing device is configured to execute instructions stored in the memory of the at least one computing device, to enable the computing device cluster to perform the method according to any one of claims 1 to 6; or
the processor of the at least one computing device is configured to execute instructions stored in the memory of the at least one computing device, to enable the computing device cluster to perform the method according to any one of claims 7 to 10.

23. A computer program product comprising instructions, wherein when the instructions are run by a computing device cluster, the computing device cluster is enabled to perform the method according to any one of claims 1 to 6; or
when the instructions are run by a computing device, the computing device is enabled to perform the method according to any one of claims 7 to 10.

24. A computer-readable storage medium, comprising computer program instructions, wherein when the computer program instructions are executed by a computing device cluster, the computing device cluster performs the method according to any one of claims 1 to 6; or when the computer program instructions are executed by a computing device, the computing device performs the method according to any one of claims 7 to 10.
